# FASCICULE DE BREVET EUROPEEN

(11) **EP 2 019 775 B1**
(45) Date de publication et mention de la délivrance du brevet: **21.10.2009**
(21) Numéro de dépôt: 07727430.6
(22) Date de dépôt: 28.03.2007
(51) Int. Cl.: B64C 7/02, B64D 29/02

(54) **AGENCEMENT D'AILE D'AERONEF COMPORTANT UN MAT D'ACCROCHAGE DE MOTEUR DEFINISSANT EN ZONE AVANT UN CANAL LATERAL D'ECOULEMENT D'AIR**
FLUGZEUGFLÜGELANORDNUNG MIT EINER TRIEBWERKSBEFESTIGUNGSGONDEL, DIE IM VORDEREN BEREICH EINEN LATERALEN LUFTSTROMKANAL DEFINIERT
AIRCRAFT WING ARRANGEMENT COMPRISING AN ENGINE ATTACHMENT PYLON DEFINING, IN THE FORWARD REGION, A LATERAL AIRFLOW CHANNEL

(30) Priorité: 31.03.2006 FR 0651136
(43) Date de publication de la demande: 04.02.2009
(73) Titulaire: AIRBUS France, 31060 Toulouse Cédex (FR)
(72) Inventeur: DANTIN, Stéphanie, F-31490 Leguevin (FR); FOL, Thierry, F-31330 Grenade (FR); GERARD, Ludovic, F-31830 Plaisance Du Touch (FR); JIMENEZ, Philippe, F-31200 Toulouse (FR)
(74) Mandataire: Ilgart, Jean-Christophe
(86) Numéro de dépôt international: PCT/EP2007/052957
(87) Numéro de publication internationale: WO 2007/113183

(56) Documents cités:
- WO-A-95/17334
- GB-A- 2 144 688
- US-A- 4 643 376

## Description

La présente invention se rapporte de façon générale à un agencement d'aile d'aéronef, du type comportant une aile ainsi qu'au moins un mât d'accrochage de moteur d'aéronef suspendu sous cette même aile.

De façon connue, un mât d'accrochage, également appelé « EMS » (de l'anglais « Engine Mounting Structure »), permet de suspendre le moteur au-dessous de la voilure de l'aéronef, par l'intermédiaire d'un système de montage comprenant une pluralité d'attaches moteur. En effet, il est prévu pour constituer l'interface de liaison entre un moteur tel qu'un turboréacteur et l'aile de l'aéronef, et permet de transmettre à la structure de cet aéronef les efforts générés par son turboréacteur associé, et autorise également le cheminement du carburant, des systèmes électriques, hydrauliques, et air entre le turboréacteur et l'aéronef.

Un agencement d'aile d'aéronef selon le préambule de la revendication 1 est connu du document GB-A-2 144 688.

Sur les turboréacteurs des aéronefs récents, l'important taux de dilution recherché dans un souci de réduction des nuisances sonores et de pollution conduit à obtenir un encombrement de la zone moteur extrêmement élevé, puisqu'une augmentation du taux de dilution engendre inéluctablement une hausse du diamètre du moteur, et plus particulièrement une hausse du diamètre de son carter de soufflante.

Ainsi, avec une garde au sol qui est naturellement fixée de manière à rester acceptable du point de vue sécuritaire, l'espace restant entre l'aile et le turboréacteur servant à loger le mât d'accrochage de ce dernier est de plus en plus restreint.

Cette évolution des turboréacteurs a eu pour conséquence de rapprocher fortement le moteur de l'aile, et donc également de réduire les dimensions du mât d'accrochage. Or il a été remarqué que ce cette configuration rapprochée du moteur et de l'aile, également dénommée configuration « close-coupling », conduisait à des effets aérodynamiques néfastes résultant directement du fort rapprochement de la nacelle du moteur, du mât d'accrochage, et de l'aile de l'aéronef.

Effectivement, des essais réalisés ont tout d'abord permis de déceler un écoulement parasite transversal au-dessus de la zone avant du mât d'accrochage, c'est-à-dire la zone aérodynamique de ce mât faisant saillie du bord d'attaque de l'aile vers l'avant, et plaquée contre une portion supérieure de la nacelle afin de procurer une continuité aérodynamique avec celle-ci. Cet écoulement parasite transversal est globalement issu d'une extrémité avant du flanc latéral de mât orienté vers l'extrémité proximale de l'aile, et se caractérise par le fait qu'il avance en passant au-dessus de la ligne de crête du mât d'accrochage, au lieu de se maintenir le long de ce même flanc jusqu'à atteindre le dessous de l'aile. Ainsi, l'écoulement parasite atteint le côté du mât orienté vers l'extrémité distale de l'aile.

Par ailleurs, en plus de cet écoulement parasite transversal se traduisant par un mouvement allant du flanc latéral de mât orienté vers l'extrémité proximale de l'aile, vers le flanc latéral opposé orienté vers l'extrémité distale de celle-ci, il a également été décelé un phénomène néfaste de décollement en bord de fuite de la nacelle enveloppant le moteur suspendu par le mât d'accrochage en question. Ce décollement se caractérise par un enroulement des filets d'air autour d'un point situé dans une zone qui est donc le siège de pertes énergétiques, et donc de traînée aérodynamique, car la couche limite n'est plus laminaire.

Ces deux phénomènes parasites s'expliquent principalement par le fait que le bord de fuite de la nacelle se retrouve alors dans les champs de compression de l'aile. Ainsi, l'écoulement tente de contourner cette zone de compression de l'aile, et évolue avec le mouvement parasite transversal précité. A cet égard, il est noté que ce phénomène est si fort qu'il donne naissance au décollement en question dans la zone où la compression de l'aile est la plus importante. Le décollement entraîne ainsi une augmentation locale de la couche limite sur la nacelle, ce qui se traduit par une augmentation néfaste de la traînée de pression visqueuse de la nacelle, et donc par une perte de performances globale de l'aéronef.

L'invention a donc pour but de proposer un agencement d'aile permettant de remédier aux inconvénients susmentionnés, rencontrés dans les réalisations de l'art antérieur.

Pour ce faire, l'invention a pour objet un agencement d'aile d'aéronef comportant une aile disposant d'une extrémité distale et d'une extrémité proximale, ainsi qu'au moins un mât d'accrochage de moteur d'aéronef suspendu sous l'aile et comprenant une zone avant située en saillie vers l'avant par rapport à un bord d'attaque de l'aile. Selon l'invention, la zone avant du mât d'accrochage comporte une saillie latérale délimitant un canal latéral d'écoulement d'air en se projetant vers l'extrémité proximale de l'aile. De plus, la saillie latérale dispose d'une extrémité arrière en contact avec le bord d'attaque de l'aile ainsi que d'une extrémité avant, la saillie latérale se projettent vers l'extrémité proximale de l'aile sur une longueur de saillie croissante en allant de son extrémité avant à son extrémité arrière.

L'invention propose donc de résoudre le problème d'écoulement parasite transversal rencontré dans l'art antérieur par l'adjonction d'une saillie latérale, pouvant par exemple prendre la forme d'une lèvre s'étendant le long de la zone avant, qui participe donc à la formation d'un canal d'écoulement d'air le long du flanc latéral de mât orienté vers l'extrémité proximale de l'aile, dit premier flanc latéral. Ainsi, l'écoulement d'air provenant de l'extrémité avant du premier flanc latéral n'est plus soumis à un mouvement parasite transversal, puisqu'il est canalisé le long de ce même premier flanc par la saillie latérale l'empêchant de se détourner en direction de la ligne de crête du mât d'accrochage.

Ensuite, l'écoulement d'air canalisé par la saillie latérale est accéléré par la forme même du canal en question, et évacué dans une direction privilégiée sous l'aile de l'aéronef, entre l'intrados de cette aile et la nacelle du moteur. Pour cette raison, le phénomène de décollement en bord de fuite de la nacelle est fortement minimisé, voire totalement éradiqué, ce qui se traduit avantageusement par une diminution de la traînée de pression visqueuse de la nacelle et donc par une amélioration des performances globales de l'aéronef.

De plus, on prévoit donc que cette saillie latérale se projetant vers l'extrémité proximale de l'aile dispose d'une extrémité arrière en contact avec le bord d'attaque de l'aile. Elle s'étend donc ensuite vers l'avant du mât d'accrochage le long de celui-ci, de préférence de façon sensiblement droite, toujours en se projetant vers l'extrémité proximale de l'aile.

Surtout, la saillie latérale dispose de l'extrémité arrière en contact avec le bord d'attaque de l'aile ainsi que d'une extrémité avant, et se projette vers l'extrémité proximale de l'aile sur une longueur de saillie croissante en allant de son extrémité avant à son extrémité arrière. Cette spécificité permet de manière avantageuse d'affiner progressivement la définition du canal d'écoulement d'air en se rapprochant du bord d'attaque de l'aile, et permet donc de disposer d'une extrémité avant de saillie latérale peu marquée, assurant la continuité aérodynamique de la zone avant du mât d'accrochage au niveau de l'initiation de cette saillie.

Préférentiellement, la saillie latérale dispose, de son extrémité avant à son extrémité arrière, d'un bord latéral libre de forme arrondie. Cela permet également de limiter les perturbations aérodynamiques susceptibles d'être provoquées par la présence de la saillie latérale spécifique à la présente invention, et assure par conséquent un écoulement d'air très peu perturbé tout autour de la zone avant du mât d'accrochage.

De préférence, le mât d'accrochage dispose donc d'un premier flanc latéral orienté vers l'extrémité proximale de l'aile, ce premier flanc latéral disposant d'une portion de forme concave participant au moins partiellement à la définition de la saillie latérale. En effet, il est noté que la formation de la saillie latérale implique la réalisation d'un premier flanc latéral disposant d'une portion de forme concave, contrairement aux réalisations de l'art antérieur dans lesquelles la surface extérieure du mât était plane et convexe. A ce titre, il est noté que la portion de forme concave du premier flanc latéral s'étend de préférence tout le long de la saillie, et peut éventuellement s'étendre au-delà de la zone avant du mât d'accrochage, c'est-à-dire sous l'aile vers l'arrière par rapport à la saillie, notamment pour des raisons de continuité aérodynamique de ce premier flanc latéral.

La saillie latérale peut également être définie conjointement avec le flanc supérieur de la zone avant du mât d'accrochage, sans sortir du cadre de l'invention.

Comme cela ressort de ce qui précède, il est noté que la saillie latérale est prévue en partie supérieure de la zone avant du mât d'accrochage, de manière à diriger l'air s'écoulant dans le canal latéral d'écoulement d'air, sous l'aile de l'aéronef. Pour ce faire, la saillie peut alors effectivement être définie conjointement par la portion supérieure concave du premier flanc latéral, et par la portion latérale du flanc supérieur qui est orientée vers l'extrémité proximale de l'aile.

Afin d'obtenir une canalisation la plus satisfaisante possible de l'écoulement d'air à l'aide de la saillie latérale, on peut faire en sorte qu'en vue de dessus, celle-ci est présente sur au moins 60% de la longueur de la zone avant du mât d'accrochage, considérée selon un axe longitudinal du mât passant par un point d'extrémité avant de celui-ci. De façon plus générale, mais toujours préférentielle, on prévoit que cette saillie latérale est présente sur 50 à 100% de la longueur de la zone avant faisant saillie du bord d'attaque, en s'étendant préférentiellement à partir de ce dernier.

Enfin, il est noté que l'agencement comprend par exemple deux mâts d'accrochage de moteur d'aéronef, chacun d'eux étant équipé de la saillie latérale sur sa zone avant, se projetant naturellement vers l'extrémité proximale de la même aile. Néanmoins, l'invention s'applique préférentiellement à un aéronef bimoteur.

L'invention a également pour objet un aéronef comprenant au moins un agencement d'aile tel que celui décrit ci-dessus.

D'autres avantages et caractéristiques de l'invention apparaîtront dans la description détaillée non limitative ci-dessous.

Cette description sera faite au regard des dessins annexés parmi lesquels ;
- la figure 1 représente une vue de dessus d'un agencement d'aile d'aéronef selon un mode de réalisation préféré de la présente invention ;
- la figure 2 représente une vue schématique en coupe prise le long de la ligne II-II de la figure 1 ;
- la figure 3 représente une vue partielle de face de l'agencement d'aile montré sur la figure 1 ;
- la figure 4 représente une vue partielle en perspective de l'agencement d'aile montré sur la figure 1 ;
- la figure 5 représente une vue partielle détaillée de dessus de l'agencement d'aile montré sur la figure 1 ;
- la figure 6a est une vue en coupe prise le long de la ligne VIa-VIa de la figure 5 ;
- la figure 6b est une vue en coupe prise le long de la ligne VIb-VIb de la figure 5 ; et
- la figure 6c est une vue en coupe prise le long de la ligne VIc-VIc de la figure 5.

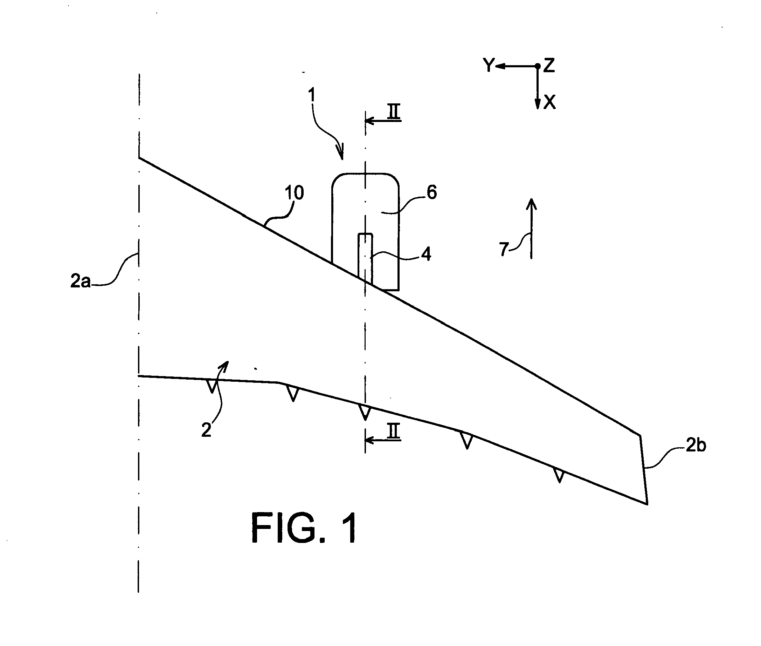

Tout d'abord en référence à la figure 1, on peut voir un agencement d'aile 1 d'aéronef selon un mode de réalisation préféré de la présente invention, cet agencement 1 comportant globalement une aile 2 disposant d'une extrémité proximale 2a destinée à être rapportée fixement sur le fuselage de l'aéronef, et d'une extrémité libre lui étant opposée, dite extrémité distale 2b.

De plus, l'agencement d'aile 1 comporte également au moins un mât d'accrochage 4 de moteur suspendu fixement sous l'aile 2, et de préférence un seul mât 4 supportant un moteur 6 tel qu'un turboréacteur, comme montré sur la figure 1. A titre indicatif, on peut indifféremment considérer que ce turboréacteur 6 appartient ou non à l'agencement d'aile 1 objet de la présente invention.

Dans toute la description qui va suivre, par convention, on appelle X la direction longitudinale des mâts d'accrochage qui est également assimilable à la direction longitudinale de l'aéronef et des turboréacteurs de ce dernier. D'autre part, on appelle Y la direction orientée transversalement par rapport aux mâts d'accrochage et également assimilable à la direction transversale de l'aéronef et des turboréacteurs de ce dernier, et enfin Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par les turboréacteurs, cette direction étant représentée schématiquement par la flèche 7.

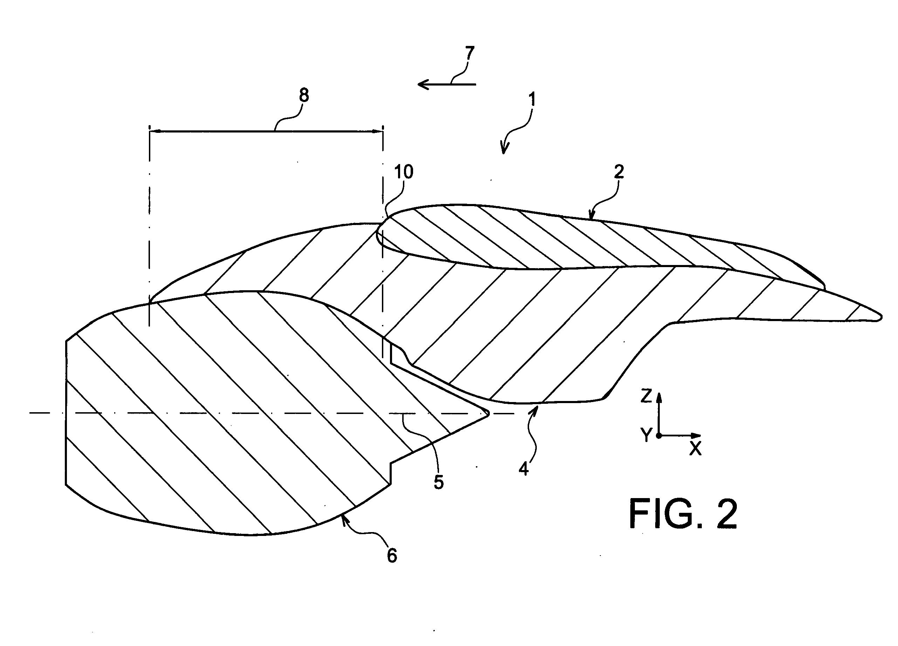

En référence à présent à la figure 2 montrant schématiquement un assemblage de l'agencement 1 comportant le turboréacteur 6, son mât d'accrochage 4 associé et l'aile 2, il est rappelé que le mât 4 comporte habituellement une structure rigide, également appelée structure primaire, portant des moyens d'accrochage du moteur, ces moyens d'accrochage disposant d'une pluralité d'attaches moteur ainsi que d'un dispositif de reprise des efforts de poussée générés par le moteur. Par ailleurs, le turboréacteur 6 est entouré d'une nacelle tel que cela est visible sur la figure 2, et le mât d'accrochage 4 comporte une autre série d'attaches (non représentées) rapportées sur la structure rigide et permettant d'assurer la suspension de ce mât sous la voilure de l'aéronef.

Sur cette figure 2 montrant l'axe longitudinal 5 du turboréacteur 6 parallèle à la direction X, on aperçoit que le mât 4 dispose globalement d'une forme aérodynamique résultant de la présence de structures secondaires s'ajoutant à la structure rigide primaire, et assurant la ségrégation et le maintien des systèmes tout en supportant des carénages aérodynamiques. A titre indicatif, parmi ces structures secondaires (non référencées) du mât 4, on compte une structure aérodynamique avant, un carénage aérodynamique arrière, un carénage de raccordement des structures aérodynamiques avant et arrière également dénommé « karman », et un carénage aérodynamique arrière inférieur également appelé « bouclier » ou « Aft Pylon Fairing », dont les fonctions essentielles sont la formation d'une barrière anti-feu et la formation d'une continuité aérodynamique entre la sortie du moteur et le mât d'accrochage.

Dans le cadre de l'invention, on s'intéresse principalement à une zone du mât d'accrochage 4 dite zone avant 8, délimitée par les lignes brisées sur la figure 2, et ayant la particularité de faire saillie vers l'avant à partir d'un bord d'attaque 10 de l'aile 2 avec lequel cette zone avant 8 est raccordée. La zone avant 8, essentiellement constituée par la structure aérodynamique avant précitée, est plaquée contre une portion supérieure de la nacelle afin de procurer une continuité aérodynamique avec celle-ci.

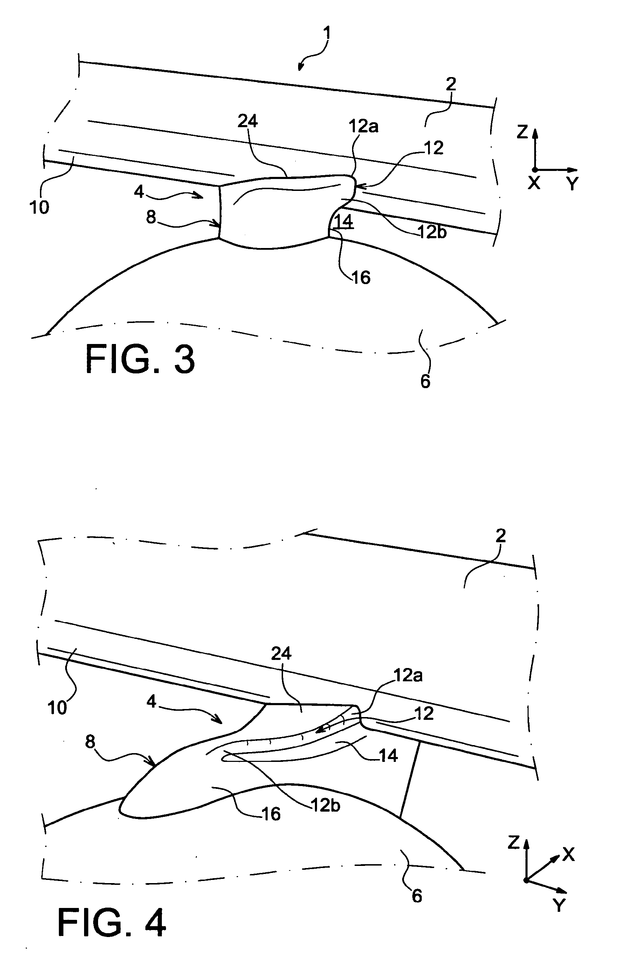

En référence à présent aux figures 3 et 4 montrant de façon plus précise la zone avant 8 du mât d'accrochage 4, on peut voir que l'une des particularités de la présente invention réside dans le fait que cette zone avant 8 comporte une saillie latérale 12 délimitant un canal latéral d'écoulement d'air 14, en se projetant vers l'extrémité proximale (non représentée) de l'aile 2.

La saillie latérale 12 est présente en partie supérieure de la zone avant 8, de manière à ce que le canal 14 qu'elle délimite soit globalement situé sous cette même saillie 12, qui dispose de préférence d'une extrémité arrière 12a en contact avec le bord d'attaque 10. De cette manière, on peut comprendre que le canal d'écoulement d'air 14, formé par la saillie 12, permet aisément de diriger l'air empruntant ce canal 14 vers la partie inférieure de l'aile 2, comme cela est le mieux visible sur la figure 3.

Pour réaliser cette saillie latérale 12 qui s'étend le long de la zone avant 8, par exemple de façon sensiblement droite parallèlement à la direction X, ou encore de manière à suivre une ligne légèrement courbe (cas non représenté), on prévoit que le premier flanc latéral 16 orienté vers l'extrémité proximale de l'aile disposant d'une portion de forme concave participant au moins partiellement à la définition de cette saillie latérale, comme cela apparaît clairement sur les figures 3 et 4. A cet égard, il est noté que la portion de forme concave du premier flanc latéral 16 peut éventuellement s'étendre vers l'arrière au-delà de la zone avant 8 délimitée sur la figure 2, donc sous l'intrados de l'aile 2, sans sortir du cadre de l'invention.

Ainsi, la spécificité liée à la présence de cette saillie 12, qui peut ici être assimilée à une lèvre se projetant en direction de l'extrémité proximale de l'aile et s'étendant à partir du bord d'attaque 10 le long de la zone avant 8, est que l'écoulement d'air provenant d'une extrémité avant du premier flanc latéral 16 n'est plus soumis à un mouvement parasite transversal, puisqu'il est progressivement canalisé le long de ce même premier flanc 16 par la saillie latérale 12 l'empêchant de se détourner vers la ligne de crête du mât d'accrochage, et le forçant donc à emprunter le canal 14.

Comme cela sera exposé plus en détails ci-dessous, la saillie 12 est initiée à partir d'une extrémité avant de très faible dimension permettant de conserver la continuité aérodynamique avec la partie d'extrémité avant de la zone 8, puis s'agrandit au fur et à mesure qu'elle se rapproche de son extrémité arrière 12a en contact avec le bord d'attaque 12a. En d'autres termes, cette saillie latérale 12 se projette sur une longueur de plus en plus importante dans la direction de l'extrémité proximale de l'aile, quand elle se rapproche du bord d'attaque 10. Ainsi, entre ces deux extrémités avant et arrière, la saillie 12 de dimensions croissantes en allant vers l'arrière présente un bord latéral libre, c'est-à-dire son bord orienté vers l'extrémité proximale de l'aile et constituant l'extrémité latérale de la saillie, de forme arrondie propice à un bon écoulement aérodynamique.

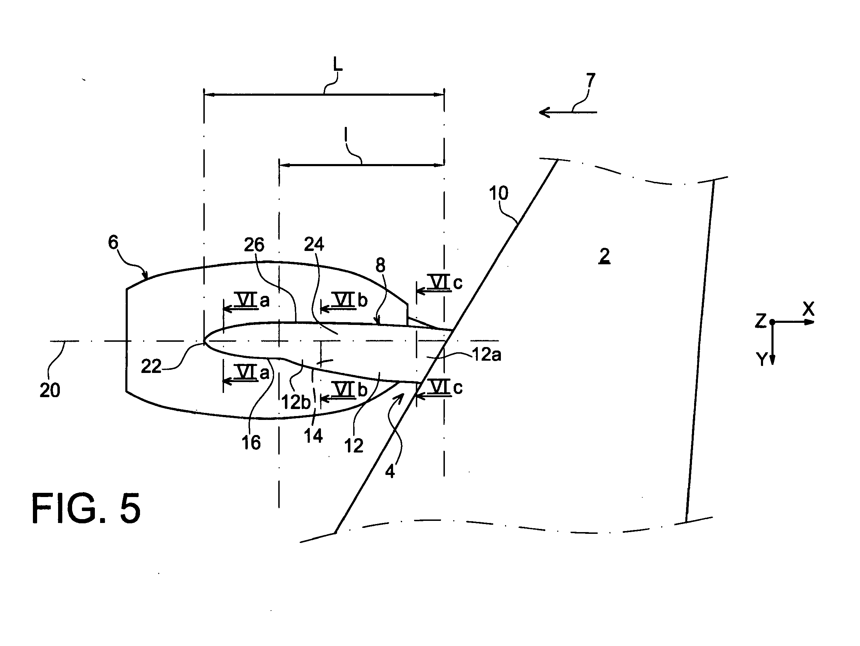

En référence plus spécifiquement à la figure 5 montrant une vue partielle de dessus de l'agencement 1, on voit que la saillie latérale 12 s'étend sur une longueur « 1 » représentant de préférence au moins 60% de la longueur « L » de la zone avant du mât d'accrochage, ces deux longueurs étant considérées selon un axe longitudinal 20 du mât de préférence parallèle à la direction X, et passant par un point d'extrémité avant 22 de la zone 8 de celui-ci, cet axe 20 étant habituellement confondu avec l'axe longitudinal 5 du turboréacteur en vue de dessus. Comme cela a été indiqué précédemment, la saillie 12 est initiée à partir de son extrémité avant 12b prévue en arrière par rapport au point 22, tandis que son extrémité arrière 12a vient se fixer sur le bord d'attaque 10 de l'aile. A titre indicatif, il est précisé que le pourcentage noté ci-dessus peut être étendu à une gamme allant de 50 à 100%, en fonction des besoins aérodynamiques rencontrés.

Toujours en référence à la figure 5 et comme évoqué ci-dessus, on peut voir que la saillie 12, située en portion haute de la zone 8 entre le premier flanc latéral 16 de cette zone et le flanc supérieur 24 de celle-ci, se projette vers l'extrémité proximale de l'aile sur une longueur de saillie croissante en allant de son extrémité avant 12b à son extrémité arrière 12a.

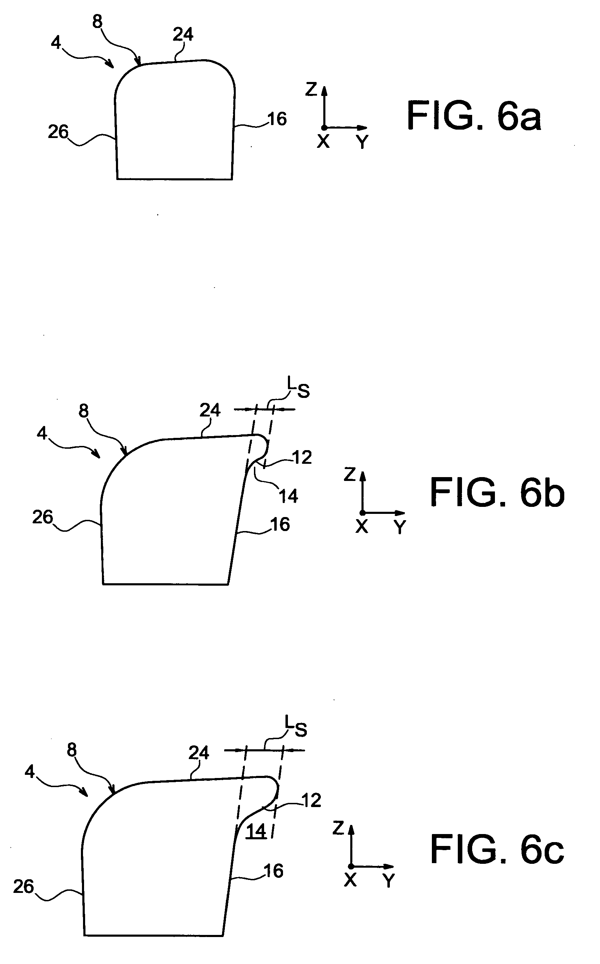

Cette particularité, pouvant être traduite par une saillie grandissante en allant vers l'arrière, sera mieux expliquée en référence aux figures 6a à 6c.

En effet, on peut voir sur la figure 6a que la zone avant 8, dans une partie d'extrémité avant ne comportant pas la saillie 12, dispose en section transversale d'une surface extérieure de conception classique, à savoir que les deux flancs latéraux 16, 26 sont sensiblement plans à la base et convexes à leurs extrémités supérieures, qui se rejoignent par l'intermédiaire du flanc supérieur 24 de forme convexe et/ou plane.

Ensuite, à proximité de l'extrémité avant 12b de la saillie 12, on peut voir que la zone 8 vue en section transversale présente une surface extérieure dont la partie supérieure présente un bossage arrondi formant la saillie 12, ce bossage étant orienté sensiblement transversalement vers l'extrémité proximale de l'aile. Comme cela ressort clairement de la figure 6b, le bossage est obtenu conjointement avec la portion supérieure au moins partiellement concave du premier flanc latéral 16, et avec la portion latérale du flanc supérieur 24 qui est convexe et orientée vers l'extrémité proximale de l'aile.

La saillie 12 se projette alors sur une longueur de saillie « Ls » relativement faible, qui est considérée selon la direction Y entre deux droites parallèles passant respectivement par la partie initiale droite du flanc 16, et par le point d'extrémité latéral du bossage vu en section. Il est noté que la forme bombée du bossage montre bien la forme arrondie désirée pour le bord latéral libre de la saillie, discutée précédemment.

Enfin, à proximité de l'extrémité arrière 12a de la saillie 12, on peut voir que la zone 8 vue en section transversale présente une surface extérieure dont la partie supérieure présente un bossage arrondi formant la saillie 12, ce bossage étant également orienté sensiblement transversalement vers l'extrémité proximale de l'aile. Ici encore, comme cela ressort de là figure 6c, le bossage est obtenu conjointement avec la portion supérieure au moins partiellement concave du premier flanc latéral 16, et avec la portion latérale du flanc supérieur 24 qui est convexe et orientée vers l'extrémité proximale de l'aile. En revanche, la saillie 12 se projette ici sur une longueur de saillie « Ls » relativement importante, qui est toujours considérée selon la direction Y entre deux droites parallèles passant respectivement par la partie initiale droite du premier flanc 16, et par le point d'extrémité latéral du bossage vu dans cette nouvelle section.

Naturellement, entre ces deux dernières sections, le bossage formant la saillie latérale 12 dispose d'une longueur de saillie grandissant progressivement.

Enfin, on prévoit de préférence que l'autre flanc latéral du mât d'accrochage 4, dit second flanc latéral 26, dispose d'une forme et d'une conception identiques à celles rencontrées dans l'art antérieur et connues de l'homme du métier.

Bien entendu, diverses modifications peuvent être apportées par l'homme du métier à l'agencement d'aile 1 selon l'invention qui vient d'être décrite, uniquement à titre d'exemple non limitatif. En particulier, il est noté que si l'invention a été décrite en relation avec le mât d'accrochage d'un aéronef bimoteur, elle pourrait également s'appliquer de façon analogue à un mât d'accrochage interne d'un aéronef quadrimoteur, et éventuellement à un mât externe d'un aéronef quadrimoteur.

## Revendications

1. Agencement d'aile (1) d'aéronef, l'agencement comportant une aile (2) disposant d'une extrémité distale (2b) et d'une extrémité proximale (2a), ainsi qu'au moins un mât d'accrochage (4) de moteur d'aéronef suspendu sous l'aile et comprenant une zone avant (8) située en saillie vers l'avant par rapport à un bord d'attaque (10) de ladite aile,
ladite zone avant (8) du mât d'accrochage (4) comportant une saillie latérale (12) délimitant un canal latéral d'écoulement d'air (14) en se projetant vers ladite extrémité proximale (2a) de l'aile,
ladite saillie latérale (12) disposant d'une extrémité arrière (12a) en contact avec ledit bord d'attaque (10) de l'aile ainsi que d'une extrémité avant (12b), **caractérisé en ce que** ladite saillie latérale (12) se projette vers ladite extrémité proximale (2a) de l'aile sur une longueur de saillie (Ls) croissante en allant de son extrémité avant (12b) à son extrémité arrière (12a).

2. Agencement d'aile (1) selon la revendication 1, **caractérisé en ce que** ladite saillie latérale (12) dispose, de son extrémité avant (12b) à son extrémité arrière (12a), d'un bord latéral libre de forme arrondie.

3. Agencement d'aile (1) selon la revendication 1 ou la revendication 2, **caractérisé en ce que** ledit mât d'accrochage (4) dispose d'un premier flanc latéral (16) orienté vers ladite extrémité proximale (2a) de l'aile, ce premier flanc latéral (16) disposant d'une portion de forme concave participant au moins partiellement à la définition de ladite saillie latérale (12).

4. Agencement d'aile (1) selon l'une quelconque des revendications précédentes, **caractérisé en ce que** ladite saillie latérale (12) est prévue en partie supérieure de la zone avant (8) du mât d'accrochage, de manière à diriger l'air s'écoulant dans ledit canal latéral d'écoulement d'air (14), sous ladite aile.

5. Agencement d'aile (1) selon l'une quelconque des revendications précédentes, **caractérisé en ce qu'**en vue de dessus, ladite saillie latérale (12) est présente sur au moins 60% de la longueur de ladite zone avant (8) du mât d'accrochage, considérée selon un axe longitudinal (20) du mât passant par un point d'extrémité (22) avant de celui-ci.

6. Agencement d'aile (1) selon l'une quelconque des revendications précédentes, **caractérisé en ce qu'**il comprend deux mâts d'accrochage (4) de moteur d'aéronef, chacun d'eux étant équipé de ladite saillie latérale (12) sur sa zone avant (8).

7. Aéronef **caractérisé en ce qu'**il comprend au moins un agencement d'aile (1) selon l'une quelconque des revendications précédentes.

## Claims

1. Aircraft wing arrangement (1) comprising a wing (2) having a distal end (2b) and a proximal end (2a), as well as at least one strut (4) for attaching the aircraft engine suspended under the wing and comprising a front zone (8) situated projecting towards the front with respect to a leading edge (10) of said wing,
said front zone (8) of the attachment strut (4) comprising a lateral projection (12) delimiting a lateral air flow channel (14) while being projected towards said proximal end (2a) of the wing,
said lateral projection (12) having a rear end (12a) in contact with said leading edge (10) of the wing as well as a front end (12b), **characterized in that** said lateral projection (12) is projected towards said proximal end (2a) of the wing over a projection length (Ls) increasing going from its front end (12b) to its rear end (12a).

2. Wing arrangement (1) according to claim 1, **characterised in that** said lateral projection (12) has, from its front end (12b) to its rear end (12a), a free lateral edge rounded in shape.

3. Wing arrangement (1) according to claim 1 or claim 2, **characterised in that** said attachment strut (4) has a first lateral flank (16) oriented towards said proximal end (2a) of the wing, this first lateral flank (16) having a concave-shaped portion participating at least partially in the definition of said lateral projection (12).

4. Wing arrangement (1) according to any of one of the preceding claims, **characterise in that** said lateral projection (12) is provided at the top part of the front zone (8) of the attachment strut, so as to direct the air flowing in said lateral air flow channel (14) under said wing.

5. Wing arrangement (1) according to any of one of the preceding claims, **characterised in that,** in plan view, said lateral projection (12) is present over at least 60% of the length of said front zone (8) of the attachment strut, considered along a longitudinal axis (20) of the strut passing through a front end point (22) thereof.

6. Wing arrangement (1) according to any of one of the preceding claims, **characterised in that** it comprises two aircraft engine attachment struts (4), each of them being equipped with said lateral projection (12) on its front zone (8).

7. Aircraft, **characterised in that** it comprises at least one wing arrangement (1) according to any one of the preceding claims.

## Patentansprüche

1. Tragflügelanordnung (1) für ein Flugzeug, die einen Tragflügel (2), der ein distales Ende (2b) und ein proximales Ende (2a) aufweist, sowie mindestens eine Montagestruktur (4) für ein Flugzeugtriebwerk, die unter dem Tragflügel aufgehängt ist und einen vorderen Bereich (8) umfasst, der in Bezug auf eine Anströmkante (10) des Tragflügels nach vorne vorspringend positioniert ist, umfasst,
wobei der vordere Bereich (8) der Montagestruktur (4) eine seitliche Auskragung (12) umfaßt, die **dadurch**, dass sie sich zum proximalen Ende (2a) des Tragflügels hin erstreckt, einen Luftströmungsseitenkanal (14) festlegt,
wobei die seitliche Auskragung (12) ein hinteres Ende (12a) in Kontakt mit der Anströmkante (10) des Tragflügels sowie ein vorderes Ende (12b) aufweist,
**dadurch gekennzeichnet, dass** sich die seitliche Auskragung (12) zum proximalen Ende (2a) des Tragflügels hin mit einer Auskragungslänge (Ls), die von deren vorderem Ende (12b) zu deren hinterem Ende (12a) zunimmt, ersteckt.

2. Tragflügelanordnung (1) nach Anspruch 1, **dadurch gekennzeichnet, dass** die seitliche Auskragung (12) von deren vorderem Ende (12b) zu deren hinterem Ende (12a) einen freien Seitenrand von gerundeter Form aufweist.

3. Tragflügelanordnung (1) nach Anspruch 1 oder Anspruch 2, **dadurch gekennzeichnet, dass** die Montagestruktur (4) eine erste Seitenflanke (16) aufweist, die zum proximalen Ende (2a) des Tragflügels gerichtet ist, wobei diese erste Seitenflanke (16) einen Bereich einer konkaven Form aufweist, der zumindest partiell an der Festlegung der seitlichen Auskragung (12) beteiligt ist.

4. Tragflügelanordnung (1) nach einem der vorhergehenden Ansprüche, **dadurch gekennzeichnet, dass** die seitliche Auskragung (12) in einem höheren Teil des vorderen Bereichs (8) der Montagestruktur derart angebracht ist, dass die in dem Luftströmungsseitenkanal (14) strömende Luft unter den Tragflügel geleitet wird.

5. Tragflügelanordnung (1) nach einem der vorhergehenden Ansprüche, **dadurch gekennzeichnet, dass** - von oben betrachtet - die seitliche Auskragung (12) über mindestens 60% der Länge des vorderen Bereichs (8) der Montagestruktur bei Betrachtung längs einer Längsachse (20) der Struktur, die durch einen vorderen Endpunkt (22) derselben läuft, vorhanden ist.

6. Tragflügelanordnung (1) nach einem der vorhergehenden Ansprüche, **dadurch gekennzeichnet, dass** sie zwei Montagestrukturen (4) eines Flugzeugtriebwerks umfasst, wobei jede von diesen mit der seitlichen Auskragung (12) in dem vorderen Bereich (8) ausgestattet ist.

7. Flugzeug, **dadurch gekennzeichnet, dass** es mindestens eine Tragflügelanordnung (1) nach einem der vorhergehenden Ansprüche aufweist.
